# EUROPEAN PATENT SPECIFICATION

(11) **EP 3 808 438 B1**
(45) Date of publication and mention of the grant of the patent: **20.12.2023**
(21) Application number: 19203596.2
(22) Date of filing: 16.10.2019
(51) Int. Cl.: B01F 25/313, B01F 25/433, B01J 4/00, B01J 19/24, B01J 19/26

(54) **DEVICE FOR MIXING PROCESS FLUID WITH INITIATOR IN A LDPE REACTOR**
VORRICHTUNG ZUM MISCHEN EINER PROZESSFLÜSSIGKEIT MIT INITIATOR IN EINEM LDPE-REAKTOR
DISPOSITIF DE MÉLANGE DE FLUIDE DE TRAITEMENT DOTÉ D'UN INITIATEUR DANS UN RÉACTEUR PEBD

(43) Date of publication of application: 21.04.2021
(73) Proprietor: Borealis AG, 1020 Vienna (AT)
(72) Inventor: WURNITSCH, Christof, 4021 Linz (AT); BILINA, Werner, 2320 Schwechat-Mannswörth (AT)
(74) Representative: Maiwald GmbH

(56) References cited:
- US-A- 1 454 196
- US-A- 4 416 610
- US-A- 5 863 128

## Description

Polyethylene has become the most important plastic worldwide with excellent mechanical and processing properties as well as chemical resistance. Depending on its melting point, polyethylene is divided into low, medium and high density polyethylene. Each type of polyethylene has its specific industrial applications. For example, high density polyethylene is harder and stiffer than low density polyethylene, can withstand higher temperatures, is less permeable by gases and more resistant to chemicals. Low density polyethylene is more flexible and stretchable.

One of the most common manufacturing processes used to manufacture low density polyethylene involves the use of a so-called tubular reactor. Ethylene is fed as a process fluid into the reactor and is polymerized into polyethylene at a pressure of 100 to 300 MPa and at a temperature of 200 to 300°C under the action of an initiator which is injected at discrete positions along the reactor. The reactor tube can have a length of up to 3500 m. Common initiators are oxygen or peroxide.

When the initiator is injected and mixed with the process fluid within the reaction zone of the reactor, the initiator forms free-radical decomposition products which start a free-radical polymerization reaction with ethylene (and optional co-monomers) as a result of which the ethylene-based polymer is obtained.

It is crucial for the manufacturing process of low density polyethylene that the concentration profile and mixing of the initiator and the process fluid is well balanced and uniform within the reaction zone. If the concentration profile is not sufficiently homogeneous, there will be areas within the reaction zone which have a higher degree of polymerization and more heat generation. Such areas may cause serious problems, such as build-up of high molecular weight material near the initiator port which may lead to clogging of the initiator port or even the reactor tube.

Various attempts have been made in the past to improve the mixing of the initiator with the process fluid.

EP 0 449 092 A1 uses an injection finger for the initiator which laterally protrudes into the process fluid channel.

WO 2002/48214 A2 imparts a rotational movement to the process fluid by the use of an arrangement which includes a number of spiral vanes on the outer and inner surfaces of a cylinder accommodated within the tubular reactor. The process fluid flows through the cylinder and through the annular gap between the cylinder and the tubular reactor. The cylinder is located upstream of the injection nozzle for the initiator.

US 8,308,087 B2 uses an injection nozzle with a Venturi-shaped fluid flow passage for the process fluid which comprises a constricting portion and an expanding portion. The constricting and expanding portions cause a change of the process fluid velocity which in turn helps to improve the transport and mixing of the process fluid with the initiator.

It is an object of the present invention to mitigate, if not eliminate problems associated with the prior art solutions. In particular, it is an object of the present invention to further improve mixing of the initiator with the process fluid within the reaction zone of the reactor tube.

A nozzle in accordance with the preamble of claim 1 is disclosed by document US 5 863 128 A.

This object is solved by the subject-matter of independent claim 1. Optional or preferred features are subject of dependent claims 2 to 13.

According to the invention, an initiator injection nozzle for mixing an initiator with a process fluid is provided. The initiator injection nozzle comprises a body comprising (i) a process fluid inlet port to receive the process fluid and an outlet port, (ii) a process fluid flow passage through which the process fluid traverses along a process fluid central flow axis between the process fluid inlet port and the outlet port, wherein the process fluid flow passage is at least partially defined by a constricting portion, a throat, and an expanding portion, (iii) an initiator inlet to receive the initiator and an initiator outlet, and (iv) an initiator fluid flow passage through which the initiator traverses along an initiator central flow axis between the initiator inlet and the initiator outlet. The initiator injection nozzle is characterised by a plurality of elongated vanes provided within the constricting portion and extending along the process fluid central flow axis, and in that each of the vanes has a leading end, a trailing end and a curved vane surface.

The plurality of vanes are configured such that an unobstructed process fluid flow cross-section perpendicular to and including the process fluid central flow axis is located within the constricting portion.

An area of the unobstructed process fluid flow cross-section becomes larger with increasing distance from the process fluid inlet port.

Preferably, in each cross-section perpendicular to the process fluid central flow axis, the unobstructed process fluid flow cross-section is defined by a portion of an axial edge of each of the plurality of vanes.

It is further preferred that in each cross-section perpendicular to the process fluid central flow axis, the portion of the axial edge of the plurality of vanes is arranged on a circular path.

Advantageously, the circular path has a diameter of 4 mm to 60 mm, preferably 5 mm to 42,5 mm, more preferably 10 mm to 24 mm, such as 12,5 mm to 17 mm, at the trailing ends (21) of the plurality of vanes (20).

According to a further preferred embodiment of the invention, a line of contact between at least one of the plurality of vanes and an inner surface of the body has a curvature which is in the range of 1°-5° per 1 mm length, preferably 1° per 1 mm length, the length being measured along the process fluid central flow axis.

Optionally, the curved vane surface of each of the plurality of vanes has the same curvature.

It is also an optional feature of the invention, according to which the number of vanes is in a range between 3 to 8, preferably 4 or 6.

Preferably, the curved vane surface of each of the plurality of vanes extends from the trailing end to the leading end of each vane.

It is further preferred that the trailing end of each of the plurality of vanes is tilted towards the leading end, preferably by a tilt angle of 40° to 70°, such as 60°, relative to the process fluid central flow axis.

Moreover, it is preferred that the trailing end of each of the plurality of vanes has an equal height, the height being measured perpendicular to the process fluid central flow axis.

According to yet a further preferred embodiment of the invention, the leading end of each of the plurality of vanes encloses an angle of 60° to 90°, such as 90°, with the process fluid central flow axis.

It is advantageous, if the leading end of each of the plurality of vanes terminates at the throat.

Most preferably, the constricting portion is sloped towards the process fluid central flow axis by an angle of 10° to 20°, such as 15°, relative to the process fluid central flow axis, and the expanding portion is sloped away from the process fluid central flow axis by an angle of 10° to 20°, such as 12,5°, relative to the process fluid central flow axis.

The foregoing summary as well as the following detailed description will be better understood when read in conjunction with the appended drawings. The appended drawings mainly serve the purpose to clearly illustrate the principles of the present invention. Moreover, in the drawings, like reference numerals designate corresponding parts throughout the drawings. It should be borne in mind, however, that the invention is not limited to the precise features indicated in the drawings and described below in the context of a preferred embodiment of the invention.
Fig. 1 is a perspective view of an initiator injection nozzle according to a preferred embodiment of the invention;
Fig. 2 is a cross-sectional view perpendicular to the flow axis of the process fluid showing the trailing ends of the guiding vanes of Fig. 1; and
Fig. 3 is a longitudinal sectional view through the initiator injection nozzle of Fig. 1 along the process fluid central flow axis.

A "process fluid" as used in the following detailed description may include ethylene and possibly any co-monomers. An "initiator" may include peroxide or oxygen.

The term "vane" may be understood to include any structure that guides the process fluid in a direction different to its flow direction along the process fluid central flow axis. A "passageway" may be formed by any suitable process, such as a mechanical process, for example drilling, or may be formed when two mating components are fixed together. The term "surface" should be understood as any face of the structure being in contact with the fluid.

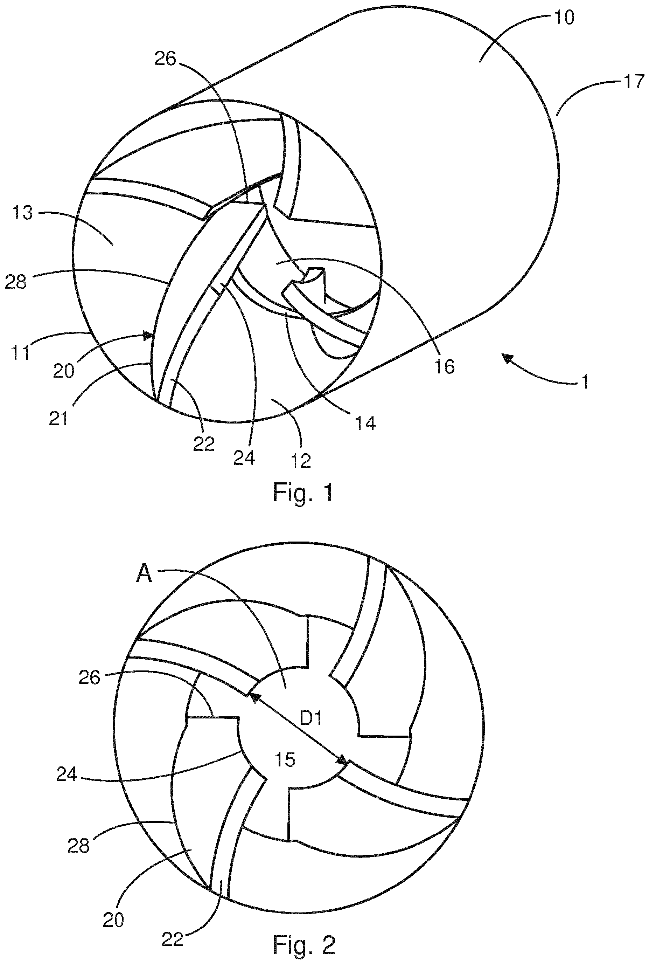

The initiator injection nozzle 1 according to a preferred embodiment of the invention includes a body 10 which is mounted to a reactor tube by using conventional means. Such conventional means include, for example, flange-type connecting means. These connecting means, however, are not shown in Fig. 1 for the sake of simplicity.

The inner diameter of the reactor tube is 20 mm to 120 mm, preferably 25 mm to 85 mm.

The body 10 generally includes three sections which are a constricting portion 12, a throat 14 and an expanding portion 16. The diameter of the constricting portion 12 reduces gradually from a diameter D2 to a diameter D1 which is smaller than D2. The expanding portion 16 has a diameter that gradually increases from the diameter D1 to a diameter D3 which might well be equal to or different to the diameter D2. In between the constricting portion 12 and the expanding portion 16 is a throat 14 which exhibits the smallest diameter D1. The three portions 12, 14 and 16 thus form a Venturi-type passageway 13.

When the initiator injection nozzle 1 is being in operation, a process fluid, such as for example ethylene (and optional co-monomers), enters the initiator injection nozzle 1 through the process fluid inlet port 11, then traverses along a process fluid central flow axis 15 (Fig. 2) until it exits the initiator injection nozzle 1 through the outlet port 17.

A plurality of guiding vanes 20 are provided within the constricting portion 12 of the body 10 and are firmly attached to the inner surface thereof. The number of guiding vanes 20 may vary upon the desired properties and other process requirements. In the preferred embodiment of the invention, four or six guiding vanes 20 are arranged within and equidistantly around the perimeter of the frusto-conical shaped constricting portion 12 of the body 10.

The guiding vanes 20 are now described in an exemplary manner by only one of them which can be best seen in Fig. 1. Preferably, all guiding vanes 20 have the same geometry.

This guiding vane 20 has a trailing end 22 and a leading end 26 as seen in the flow direction of the process fluid. Between the trailing end 22 and the leading end 26 is located an axial edge 24. Despite the fact that the axial edge 24 does not extend parallel to the process fluid central flow axis 15, it can well be considered to extend essentially along or in a longitudinal direction of the body 10.

The guiding vane 20 has at least one curved surface 21 which, as can be seen in Fig. 1, is preferably convexly shaped. Preferably, the curved surface 21 extends between the trailing end 22 and the leading end 26. The vane surface on the opposite side of the guiding vane 20 is preferably also curved, preferably concavely shaped. The guiding vane 20 is attached to the inner surface of the constricting portion 12 of the body 10 which results in a curved line of contact 28 (penetration line 28) between the guiding vane 20 and the inner surface of the constricting portion 12 of the body 10. It goes without saying, that there are two lines of contact on both sides of the material thickness of the guiding vane 20 which, assuming a uniform material thickness, always have the same distance to each other.

It can also be taken from Fig. 1 that the trailing end 22 is tilted towards the leading end 26. Preferably, the trailing end 22 is in addition concavely shaped. As a result, the upper portion of the trailing end 22 which merges into the axial edge 24 is located closer to the leading end 26 than the opposite lower portion which is located in proximity to the inner surface of the constricting portion 12 of the body 10.

The height of each vane 20 might be equal or might alternate with every second guiding vane 20 having the same height measured in a radial direction of the body 10.

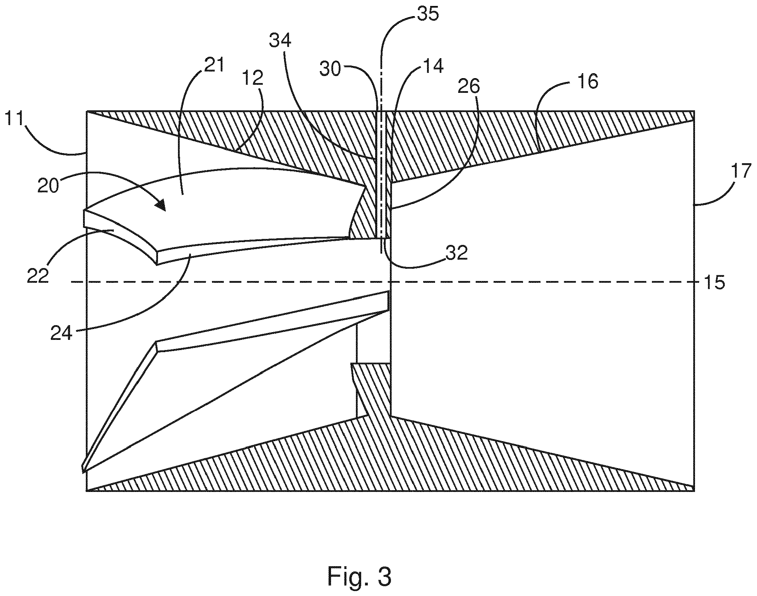

As can be seen in Fig. 1 and Fig. 3, all guiding vanes 20 terminate at the throat with the leading end 26 of each vane 20 preferably extending perpendicular to the process fluid central flow axis 15.

Irrespective of the number of guiding vanes 20 being provided within the constricting portion 12 of the body 10, they are preferably oriented uniformly so as to impart a rotational movement to the process fluid in the same direction.

In operation, when the process fluid enters the inlet port 11 of the body 10 and flows over the curved surface 21 of the guiding vanes 20, the longitudinal movement of the process fluid along the process fluid central flow axis 15 will be superimposed by a rotational movement, thus creating a process fluid vortex within the constricting portion 12 of the body 10. Due to the leading end 26 of the guiding vane 20 extending radially and perpendicular to the process fluid central flow axis 15, the process fluid flow will suddenly disrupt at the leading end 26, thus causing Eddy currents downstream of the leading end 26. These Eddy currents will further improve the mixing of the process fluid with the initiator injected through the initiator inlet 30 (Fig. 3).

With reference to Fig. 2, it can clearly be seen that the guiding vanes 20 do not occupy the entire cross-sectional area perpendicular to the process fluid central flow axis 15 in each portion or section of the body 1. There will be an unobstructed process fluid flow cross-section A at each position along the process fluid central flow axis 15. In other words, if the body 10 is cut into thin slices along the process fluid central flow axis 15 (the area of each slice being perpendicular to the process fluid central flow axis 15), there will always be a cross-sectional area A that is unobstructed. This unobstructed area A includes the process fluid central flow axis 15 and may vary along the length direction of the body 10. In accordance with the invention, the area of the unobstructed process fluid flow cross-section A becomes larger with increasing distance from the process fluid inlet port 11, i.e. towards the process fluid outlet port 17.

The longitudinal sectional view of Fig. 3 clearly shows the Venturi-type body 10 and how the unobstructed area A of the process fluid flow cross-section varies in the longitudinal direction of the body 10. In addition, Fig. 3 clearly shows the initiator inlet 30, the initiator outlet 32 and the initiator fluid flow passage 34 defining an initiator central flow axis 35. According to the preferred embodiment of the invention, the initiator fluid flow passage 34 extends in a radial direction of the body 10 at a position which corresponds length-wise to the throat 14 of the body 10. Hence, the process fluid flow passage 15 intersects the initiator fluid flow passage 35 at the throat 14. The initiator fluid flow passage 34 extends through one of the guiding vanes 20 at a position which is in proximity to the leading end 26 thereof. The position does not coincide with the leading end 26 as the initiator fluid flow passage 34 has to be closed circumferentially. The initiator fluid flow passage 34, however, is located nearest to the leading end 26 of one of the guiding vanes 20. The initiator outlet 32 is preferably nozzle-shaped and is provided on the axial edge 24 of the respective guiding vane 20. The initiator outlet 32 has preferably a circular perimeter, but might as well have other configurations, if needed.

A specific example of a preferred embodiment of the invention includes the following dimensions of the guiding vanes 20 and the body 10. The trailing end 22 is tilted by a tilt angle of 40° to 70°, such as 60°, relative to the process fluid central flow axis 15. The leading end 26 extends perpendicular to the process fluid central flow axis 15. The length measured along the process fluid central flow axis 15 of each vane 20 is preferably 65 mm, and the wall thickness amounts to 2 mm to 10 mm, such as 4 mm. The surface 21 of each vane 20, which preferably extends between the trailing end 22 and the leading end 26, is curved by 1° per mm length. The body 10 is Venturi-shaped in that the constricting portion 12 has an inlet angle of 15° relative to the process fluid central flow axis 15 and the expanding portion 16 has an outlet angle of 12,5°. The open diameter at the throat 14 (without any guiding vanes 20) is 30 % to 80 % of the inner diameter of the tubular reactor. In other words, the open diameter at the throat 14 is 6 mm to 96 mm, preferably 7,5 mm to 68 mm, more preferably 16 mm to 36 mm, such as 20 mm to 25,5 mm. The open diameter Dl, that means the unobstructed diameter between the axial edges 24 of the vanes 20 and the process fluid central flow axis 15 at the throat 14 is 20 % to 50 % of the inner diameter of the tubular reactor. In other words, the open diameter at the throat is 4 mm to 60 mm, preferably 5 mm to 42,5 mm, more preferably 10 mm to 24 mm, such as 12,5 mm to 17 mm. The diameter of the open unobstructed area A at the process fluid inlet port 11 is 30 % to 80 % of the inner diameter of the tubular reactor. In other words, the open unobstructed area A at the process fluid inlet port has a diameter of 6 mm to 96 mm, preferably 7,5 mm to 68 mm, more preferably 16 mm to 36 mm, such as 20 mm to 25,5 mm.

Due to the fact that the body 10 has a Venturi-type shape which effects an acceleration of the process fluid entering the inlet port 11 and due to the provision of a number of guiding vanes 20 inside the constricting portion 12 of the body 10, the process fluid flow is sufficiently fast and turbulent at the position where the initiator is injected into the process fluid flow passage 13. In addition, the guiding vanes 20 further minimize or even eliminate any wall friction effects in that the process fluid flow velocity is increased in proximity to the internal surfaces of the constricting portion 14 of the body 10. Because the initiator is injected nearer to the process fluid central flow axis 15, no initiator layer will build up close to the wall of the body 10. And as the initiator outlet 32 is flush with the axial edge 24 of the respective guiding vane 20 prevents the formation of a gel at the initiator outlet 32 as would otherwise be the case if part of the initiator fluid flow passage 34 and the initiator outlet 32 would protrude beyond the axial edge 24 of the guiding vane 20.

## Claims

1. An initiator injection nozzle (1) for mixing an initiator with a process fluid, comprising a body (10) comprising:
- a process fluid inlet port (11) to receive the process fluid and an outlet port (17);
- a process fluid flow passage (13) through which the process fluid traverses along a process fluid central flow axis (15) between the process fluid inlet port (11) and the outlet port (17), wherein the process fluid flow passage (13) is at least partially defined by a constricting portion (12), a throat (14), and an expanding portion (16);
- an initiator inlet (30) to receive the initiator and an initiator outlet (32); and
- an initiator fluid flow passage (34) through which the initiator traverses along an initiator central flow axis (35) between the initiator inlet (30) and the initiator outlet (32);
wherein a plurality of elongated vanes (20) are provided within the constricting portion (12) and extend along the process fluid central flow axis (15),
and wherein each of the vanes (20) has a leading end (22), a trailing end (26) and a curved vane surface (21),
wherein the plurality of vanes (20) are configured such that an unobstructed process fluid flow cross-section (A) perpendicular to and including the process fluid central flow axis (15) is located within the constricting portion (12),
**characterized**
**in that** an area of the unobstructed process fluid flow cross-section (A) becomes larger with increasing distance from the process fluid inlet port (11).

2. The initiator injection nozzle (1) of claim 1, **characterised in that** in each cross-section perpendicular to the process fluid central flow axis (15), the unobstructed process fluid flow cross-section (A) is defined by a portion of an axial edge (24) of each of the plurality of vanes (20).

3. The initiator injection nozzle (1) of claim 2, **characterised in that** in each cross-section perpendicular to the process fluid central flow axis (15), the portion of the axial edge (24) of the plurality of vanes (20) is arranged on a circular path.

4. The initiator injection nozzle (1) of claim 3, **characterised in that** the circular path has a diameter of 4 mm to 60 mm, preferably 5 mm to 42,5 mm, more preferably 10 mm to 24 mm, such as 12,5 mm to 17 mm, at the trailing ends (21) of the plurality of vanes (20).

5. The initiator injection nozzle (1) of any of the preceding claims, **characterised in that** a line of contact (28) between at least one of the plurality of vanes (20) and an inner surface of the body (10) has a curvature which is in the range of 1°-5° per 1 mm length, preferably 1° per 1 mm length, the length being measured along the process fluid central flow axis (15).

6. The initiator injection nozzle (1) of any of the preceding claims, **characterised in that** the curved vane surface (21) of each of the plurality of vanes (20) has the same curvature.

7. The initiator injection nozzle (1) of any of the preceding claims, **characterised in that** the number of vanes (20) is in a range between 3 to 8, preferably 4 or 6.

8. The initiator injection nozzle (1) of any of the preceding claims, **characterised in that** the curved vane surface (21) of each of the plurality of vanes (20) extends from the trailing end (26) to the leading end (22) of each vane (20).

9. The initiator injection nozzle (1) of any of the preceding claims, **characterised in that** the leading end (22) of each of the plurality of vanes (20) is tilted towards the trailing end (26), preferably by a tilt angle of 40 to 70°, such as 60°, relative to the process fluid central flow axis (15).

10. The initiator injection nozzle (1) of any of the preceding claims, **characterised in that** the leading end (22) of each of the plurality of vanes (20) has an equal height, the height being measured perpendicular to the process fluid central flow axis (15).

11. The initiator injection nozzle (1) of any of the preceding claims, **characterised in that** the trailing end (26) of each of the plurality of vanes (20) encloses an angle of 60° to 90°, such as 90° with the process fluid central flow axis (15).

12. The initiator injection nozzle (1) of any of the preceding claims, **characterised in that** the trailing end (26) of each of the plurality of vanes (20) terminates at the throat (14).

13. The initiator injection nozzle (1) of any of the preceding claims, **characterised in that** the constricting portion (12) is sloped towards the process fluid central flow axis (15) by an angle of 10° to 20°, such as 15°, relative to the process fluid central flow axis (15), and **in that** the expanding portion (16) is sloped away from the process fluid central flow axis (15) by an angle of 10° to 20°, such as 12,5°, relative to the process fluid central flow axis (15).

## Patentansprüche

1. Initiator-Einspritzdüse (1) zum Mischen eines Initiators mit einer Prozessflüssigkeit,
umfassend einen Körper (10), umfassend:
- eine Prozessflüssigkeits-Einlassöffnung (11) zur Aufnahme der Prozessflüssigkeit und eine Auslassöffnung (17);
- einen Prozessflüssigkeits-Strömungsdurchgang (13), durch den die Prozessflüssigkeit entlang einer zentralen Prozessflüssigkeits-Strömungsachse (15) zwischen der Prozessflüssigkeits-Einlassöffnung (11) und der Auslassöffnung (17) hindurchgeht, wobei der Prozessflüssigkeits-Strömungsdurchgang (13) zumindest teilweise durch einen Verengungsabschnitt (12), eine Verengung (14) und einen Expandierungsabschnitt (16) definiert ist;
- einen Initiatoreinlass (30) zur Aufnahme des Initiators und einen Initiatorauslass (32); und
- einen Initiatorfluid-Strömungsdurchgang (34), durch den der Initiator entlang einer zentralen Initiatorströmungsachse (35) zwischen dem Initiatoreinlass (30) und dem Initiatorauslass (32) hindurchgeht; wobei eine Vielzahl von länglichen Flügeln (20) innerhalb des Verengungsabschnitts (12) vorgesehen sind und sich entlang der zentralen Prozessflüssigkeits-Strömungsachse (15) erstrecken,
und wobei jeder der Flügel (20) ein vorderes Ende (22), ein hinteres Ende (26) und eine gekrümmte Flügeloberfläche (21) aufweist, wobei die Vielzahl von Flügeln (20) so konfiguriert ist, dass sich ein unbehinderter Prozessflüssigkeits-Strömungsquerschnitt (A) senkrecht zu und einschließlich der zentralen Prozessflüssigkeits-Strömungsachse (15) innerhalb des Verengungsabschnitts (12) befindet,
**dadurch gekennzeichnet, dass** eine Fläche des unbehinderten Prozessflüssigkeits-Strömungsquerschnitts (A) mit zunehmendem Abstand von der Prozessflüssigkeits-Einlassöffnung (11) größer wird.

2. Initiator-Einspritzdüse (1) nach Anspruch 1, **dadurch gekennzeichnet, dass** in jedem Querschnitt senkrecht zur zentralen Prozessflüssigkeits-Strömungsachse (15) der unbehinderte Prozessflüssigkeits-Strömungsquerschnitt (A) durch einen Abschnitt einer axialen Kante (24) von jeder der Vielzahl von Flügeln (20) definiert ist.

3. Initiator-Einspritzdüse (1) nach Anspruch 2, **dadurch gekennzeichnet, dass** in jedem Querschnitt senkrecht zur zentralen Prozessflüssigkeits-Strömungsachse (15) der Abschnitt der axialen Kante (24) der Vielzahl von Flügeln (20) auf einer Kreisbahn angeordnet ist.

4. Initiator-Einspritzdüse (1) nach Anspruch 3, **dadurch gekennzeichnet, dass** die Kreisbahn an den hinteren Enden (21) der Vielzahl von Flügeln (20) einen Durchmesser von 4 mm bis 60 mm, vorzugsweise 5 mm bis 42,5 mm, bevorzugter 10 mm bis 24 mm, wie 12,5 mm bis 17 mm, aufweist.

5. Initiator-Einspritzdüse (1) nach einem der vorangehenden Ansprüche, **dadurch gekennzeichnet, dass** eine Kontaktlinie (28) zwischen mindestens einer der Vielzahl von Flügeln (20) und einer Innenoberfläche des Körpers (10) eine Krümmung aufweist, die im Bereich von 1°-5° pro 1 mm Länge, vorzugsweise 1° pro 1 mm Länge, liegt, wobei die Länge entlang der zentralen Prozessflüssigkeits-Strömungsachse (15) gemessen wird.

6. Initiator-Einspritzdüse (1) nach einem der vorangehenden Ansprüche, **dadurch gekennzeichnet, dass** die gekrümmte Flügeloberfläche (21) jeder der Vielzahl von Flügeln (20) die gleiche Krümmung aufweist.

7. Initiator-Einspritzdüse (1) nach einem der vorangehenden Ansprüche, **dadurch gekennzeichnet, dass** die Anzahl der Flügel (20) in einem Bereich zwischen 3 bis 8, vorzugsweise 4 oder 6, liegt.

8. Initiator-Einspritzdüse (1) nach einem der vorangehenden Ansprüche, **dadurch gekennzeichnet, dass** sich die gekrümmte Flügeloberfläche (21) von jeder der Vielzahl von Flügeln (20) vom hinteren Ende (26) zum vorderen Ende (22) jedes Flügels (20) erstreckt.

9. Initiator-Einspritzdüse (1) nach einem der vorangehenden Ansprüche, **dadurch gekennzeichnet, dass** das vordere Ende (22) jeder der Vielzahl von Flügeln (20) in Richtung des hinteren Endes (26) vorzugsweise um einen Neigungswinkel von 40 bis 70°, wie 60° relativ zur zentralen Prozessflüssigkeits-Strömungsachse (15) geneigt ist.

10. Initiator-Einspritzdüse (1) nach einem der vorangehenden Ansprüche, **dadurch gekennzeichnet, dass** das vordere Ende (22) jeder der Vielzahl von Flügeln (20) eine gleiche Höhe aufweist, wobei die Höhe senkrecht zur zentralen Prozessflüssigkeits-Strömungsachse (15) gemessen wird.

11. Initiator-Einspritzdüse (1) nach einem der vorangehenden Ansprüche, **dadurch gekennzeichnet, dass** das hintere Ende (26) von jeder der Vielzahl von Flügeln (20) mit der zentralen Prozessflüssigkeits-Strömungsachse (15) einen Winkel von 60° bis 90°, wie 90°, umfasst.

12. Initiator-Einspritzdüse (1) nach einem der vorangehenden Ansprüche, **dadurch gekennzeichnet, dass** das hintere Ende (26) von jeder der Vielzahl von Flügeln (20) an der Verengung (14) endet.

13. Initiator-Einspritzdüse (1) nach einem der vorangehenden Ansprüche, **dadurch gekennzeichnet, dass** der Verengungsabschnitt (12) in Richtung der zentralen Prozessflüssigkeits-Strömungsachse (15) um einen Winkel von 10° bis 20°, wie 15°, relativ zur zentralen Prozessflüssigkeits-Strömungsachse (15) geneigt ist, und dass der Expandierungsabschnitt (16) von der zentralen Prozessflüssigkeits-Strömungsachse (15) um einen Winkel von 10° bis 20°, wie 12,5°, relativ zur zentralen Prozessflüssigkeits-Strömungsachse (15) weg geneigt ist.

## Revendications

1. Buse d'injection d'initiateur (1) pour mélanger un initiateur avec un fluide de traitement, comprenant un corps (10) comprenant :
- un orifice d'entrée de fluide de traitement (11) pour recevoir le fluide de traitement, et un orifice de sortie (17) ;
- un passage d'écoulement de fluide de traitement (13) que le fluide de traitement traverse le long d'un axe d'écoulement central de fluide de traitement (15) entre l'orifice d'entrée de fluide de traitement (11) et l'orifice de sortie (17), dans lequel le passage d'écoulement de fluide de traitement (13) est au moins partiellement défini par une partie d'étranglement (12), un col (14), et une partie d'expansion (16) ;
- une entrée d'initiateur (30) pour recevoir l'initiateur, et une sortie d'initiateur (32) ; et
- un passage d'écoulement de fluide initiateur (34) que l'initiateur traverse le long d'un axe d'écoulement central de fluide initiateur (35) entre l'entrée d'initiateur (30) et la sortie d'initiateur (32) ;
dans lequel une pluralité de pales allongées (20) sont prévues à l'intérieur de la partie d'étranglement (12) et s'étendent le long de l'axe d'écoulement central de fluide de traitement (15),
et dans lequel chacune des pales (20) a une extrémité avant (22), une extrémité arrière (26) et une surface de pale courbe (21),
dans lequel la pluralité de pales (20) sont configurées de telle sorte qu'une section transversale d'écoulement de fluide de traitement libre (A) perpendiculaire à l'axe d'écoulement central de fluide de traitement (15) et incluant celui-ci soit située à l'intérieur de la partie d'étranglement (12),
**caractérisée en ce qu'**une aire de la section transversale d'écoulement de fluide de traitement libre (A) augmente avec une distance croissante par rapport à l'orifice d'entrée de fluide de traitement (11).

2. Buse d'injection d'initiateur (1) de la revendication 1, **caractérisée en ce que** dans chaque section transversale perpendiculaire à l'axe d'écoulement central de fluide de traitement (15), la section transversale d'écoulement de fluide de traitement libre (A) est définie par une partie d'un bord axial (24) de chacune de la pluralité de pales (20).

3. Buse d'injection d'initiateur (1) de la revendication 2, **caractérisée en ce que** dans chaque section transversale perpendiculaire à l'axe d'écoulement central de fluide de traitement (15), la partie du bord axial (24) de la pluralité de pales (20) est arrangée sur une trajectoire circulaire.

4. Buse d'injection d'initiateur (1) de la revendication 3, **caractérisée en ce que** la trajectoire circulaire a un diamètre de 4 mm à 60 mm, préférentiellement de 5 mm à 42,5 mm, plus préférentiellement de 10 mm à 24 mm tel que 12,5 mm à 17 mm, aux extrémités arrière (21) de la pluralité de pales (20).

5. Buse d'injection d'initiateur (1) de l'une quelconque des revendications précédentes, **caractérisée en ce qu'**une ligne de contact (28) entre au moins une de la pluralité de pales (20) et une surface intérieure du corps (10) a une courbure qui est située dans la plage de 1°-5° par 1 mm de longueur, préférentiellement de 1° par 1 mm de longueur, la longueur étant mesurée le long de l'axe d'écoulement central de fluide de traitement (15).

6. Buse d'injection d'initiateur (1) de l'une quelconque des revendications précédentes, **caractérisée en ce que** la surface de pale courbe (21) de chacune de la pluralité de pales (20) a la même courbure.

7. Buse d'injection d'initiateur (1) de l'une quelconque des revendications précédentes, **caractérisée en ce que** le nombre de pales (20) est situé dans une plage entre 3 à 8, préférentiellement de 4 ou 6.

8. Buse d'injection d'initiateur (1) de l'une quelconque des revendications précédentes, **caractérisée en ce que** la surface de pale courbe (21) de chacune de la pluralité de pales (20) s'étend de l'extrémité arrière (26) à l'extrémité avant (22) de chaque pale (20).

9. Buse d'injection d'initiateur (1) de l'une quelconque des revendications précédentes, **caractérisée en ce que** l'extrémité avant (22) de chacune de la pluralité de pales (20) est inclinée vers l'extrémité arrière (26), préférentiellement d'un angle d'inclinaison de 40 à 70°, tel que 60°, par rapport à l'axe d'écoulement central de fluide de traitement (15).

10. Buse d'injection d'initiateur (1) de l'une quelconque des revendications précédentes, **caractérisée en ce que** l'extrémité avant (22) de chacune de la pluralité de pales (20) a une hauteur égale, la hauteur étant mesurée perpendiculairement à l'axe d'écoulement central de fluide de traitement (15).

11. Buse d'injection d'initiateur (1) de l'une quelconque des revendications précédentes, **caractérisée en ce que** l'extrémité arrière (26) de chacune de la pluralité de pales (20) définit un angle de 60° à 90°, tel que 90°, avec l'axe d'écoulement central de fluide de traitement (15).

12. Buse d'injection d'initiateur (1) de l'une quelconque des revendications précédentes, **caractérisée en ce que** l'extrémité arrière (26) de chacune de la pluralité de pales (20) se termine au col (14).

13. Buse d'injection d'initiateur (1) de l'une quelconque des revendications précédentes, **caractérisée en ce que** la partie d'étranglement (12) est en biseau vers l'axe d'écoulement central de fluide de traitement (15) suivant un angle de 10° à 20°, tel que 15°, par rapport à l'axe d'écoulement central de fluide de traitement (15) et **en ce que** la partie d'expansion (16) est en biseau en s'éloignant de l'axe d'écoulement central de fluide de traitement (15) suivant un angle de 10° à 20°, tel que 12,5°, par rapport à l'axe d'écoulement central de fluide de traitement (15).
